# EUROPÄISCHE PATENTSCHRIFT

(11) **EP 2 992 741 B1**
(45) Veröffentlichungstag und Bekanntmachung des Hinweises auf die Patenterteilung: **21.06.2017**
(21) Anmeldenummer: 14731540.2
(22) Anmeldetag: 30.04.2014
(51) Int. Cl.: H05B 37/02

(54) **VERFAHREN ZUR ANSTEUERUNG FÜR EIN BETRIEBSGERÄT FÜR LEUCHTMITTEL**
METHOD FOR CONTROLLING AN OPERATING DEVICE FOR LIGHTING MEANS
PROCÉDÉ DE COMMANDE D'UN APPAREIL DE FONCTIONNEMENT DESTINÉ À DES MOYENS D'ÉCLAIRAGE

(30) Priorität: 30.04.2013 AT 1452013 U
(43) Veröffentlichungstag der Anmeldung: 09.03.2016
(73) Patentinhaber: Tridonic GmbH & Co. KG, 6851 Dornbirn (AT)
(72) Erfinder: MOZELT, Michael, A-6850 Dornbirn (AT)
(74) Vertreter: Rupp, Christian
(86) Internationale Anmeldenummer: PCT/AT2014/000100
(87) Internationale Veröffentlichungsnummer: WO 2014/176613

(56) Entgegenhaltungen:
- EP-A1- 1 555 859
- AT-U1- 11 110
- DE-A1-102011 100 002
- US-A1- 2005 075 134

## Beschreibung

Die Erfindung betrifft ein Verfahren zur Ansteuerung für mindestens ein Betriebsgerät für Leuchtmittel gemäß dem Oberbegriff des Patentanspruchs 1, ein Beleuchtungssystem mit einem mobiles Bediengerät sowie mindestens einem Betriebsgerät zum Betreiben von Leuchtmitteln gemäß dem Oberbegriff des Patentanspruchs 2, ein mobiles Bediengerät zum Ausgeben von digitalen Steuerbefehlen über eine Busleitung gemäß dem Oberbegriff des Patentanspruchs 8.

### Technisches Gebiet

Derartige Verfahren werden zur Ansteuerung von Betriebsgeräten für Leuchtmittel genutzt und werden in Beleuchtungssystemen verwendet, um Leuchtmittel mit Hilfe einer zentralen Steuereinheit ein- und auszuschalten und in der Helligkeit einzustellen. Üblicherweise werden dabei die Leuchtmittel von Betriebsgeräten angesteuert. Die Betriebsgeräte werden in Gruppen zusammengefasst und können von einer oder auch mehreren zentralen Steuereinheiten gesteuert werden. Mit dem Begriff Leuchtmittel werden sowohl Gasentladungslampen als auch Halogenlampen oder Leuchtdioden (LED) bezeichnet. Ein derartiges Leuchtmittel kann einzeln oder gemeinsam mit weiteren Leuchtmitteln in einer Leuchte angeordnet sein, die auch das Betriebsgerät enthalten kann.

### Stand der Technik

Bei modernen Beleuchtungssystemen werden oftmals durch die zentrale Steuereinheit digitale Steuerbefehle an die Betriebsgeräte übersendet. Durch diese externen Steuerbefehle lassen sich insbesondere Helligkeitswerte vorgeben, um verschiedene Beleuchtungszustände zu erreichen. Die Betriebsgeräte können mit einer Adresse versehen sein, um eine einzelne oder auch gruppenweite Ansteuerung durch die zentrale Steuereinheit zu ermöglichen.

Ein weit verbreitetes Steuerungsverfahren ist die Ansteuerung von Beleuchtungssystemen gemäß DALI (Digital Adressable Lighting Interface) Standard. Dieser Standard definiert eine Schnittstelle und ein Übertragungsformat zur digitalen Ansteuerung von Betriebsgeräten, wobei für die einzelnen Betriebsgeräte Adressen vergeben werden können. Die Betriebsgeräte können über die externen Steuerbefehle ein- und ausgeschaltet oder in der Helligkeit gesteuert werden, zudem kann eine spezielle Betriebsbedingung wie ein Notbeleuchtungszustand initiiert werden und Fehlermeldungen abgefragt werden.

Der DALI Standard ist 16 Bit Manchester-Code, der eine maximale Dimmgeschwindigkeit bei einer Helligkeitsänderung von 1% bis 100% in knapp 0,7 Sekunden ermöglicht.
Der Hochpegel liegt im Bereich von ungefähr 16V, der niedrige Pegel bei einer Spannung von ungefähr 0 Volt.

Moderne Beleuchtungsanlagen lassen sich zwar über Steuergeräte steuern, es gibt aber bisher wenig Möglichkeiten zur Anbindung mobiler Bediengeräte.

Bekannt ist beispielsweise auch das Dokument EP 1 555 859 A1.

### Darstellung der Erfindung

Es ist die Aufgabe der Erfindung, ein Verfahren bereitzustellen, welches die Ansteuerung von Betriebsgeräten durch eine Steuereinheit ohne die oben genannten Nachteile bzw. unter einer deutlichen Reduzierung dieser Nachteile ermöglicht.

Diese Aufgabe wird für ein Verfahren erfindungsgemäß durch die kennzeichnenden Merkmale des Patentanspruchs 12 und für eine gattungsgemäße Vorrichtung erfindungsgemäß durch die kennzeichnenden Merkmale der Patentansprüche 2 und 8 gelöst. Besonders vorteilhafte Ausführungen der Erfindung sind in den Unteransprüchen beschrieben.

Die Erfindung betrifft ein Verfahren zur Steuerung eines Beleuchtungssystems aufweisend eine Busleitung an die wenigstens ein Betriebsgerät für Leuchtmittel und wenigstens ein mobiles Bediengerät angeschlossen ist, wobei das Beleuchtungssystem von dem mobilen Bediengerät durch Befehle gesteuert wird umfassend die folgenden Schritte:
- Generieren eines modulierten Signals in dem mobilen Bediengerät,
- Senden des modulierten Signals durch Ausgabe dieses Signals an einem Ausgang des mobilen Bediengerät an die Busleitung,
- Empfangen und Auswerten des modulierten Signals durch ein Steuergerät,
- Weiterleiten der ausgewerteten Befehle durch das Steuergerät an die Busleitung.

Die Erfindung betrifft auch ein Beleuchtungssystem mit mindestens einem Betriebsgerät zum Betreiben von Leuchtmitteln, mit einem Steuergerät, welches digitale Steuerbefehle empfängt und mit einer Busleitung verbunden ist, wobei wenigstens ein mobiles Bediengerät an das Steuergerät angeschlossen ist, wobei das Beleuchtungssystem von dem mobilen Bediengerät zum Generieren eines modulierten Signals ausgelegt ist und zur Ausgabe des modulierten Signals an einem Ausgang des mobilen Bediengeräts an das Steuergerät ausgelegt ist, wobei das Steuergerät zum Empfangen und Auswerten des modulierten Signals ausgelegt ist.

Ein Steuerbefehl ist gemäß der Erfindung nicht nur ein Einschaltbefehl, Ausschaltbefehl oder neuer Helligkeitswert, der an ein Betriebsgerät übertragen werden kann, sondern kann auch erweiterte Informationen enthalten. Insbesondere kann eine Farbinformation bzw. ein Farbbefehl, eine Adresse, eine Zustandsinformation oder ein Fehlersignal als Steuerbefehl übertragen werden.

Die Erfindung bezieht sich auch auf eine Vorrichtung zum Empfangen von Steuerbefehlen durch ein Betriebsgerät von Leuchtmitteln. Das Betriebsgerät weist eine Treiberschaltung zum Betreiben des Leuchtmittels auf. Zum Empfang und zur Auswertung der Steuerbefehle weist das Betriebsgerät eine Schnittstellenschaltung auf. Gemäß der empfangenen Steuerbefehle kann das Betriebsgerät über die Treiberschaltung den Betrieb und die Helligkeit des Leuchtmittels steuern.

### Beschreibung der bevorzugten Ausführungsbeispiele

Nachfolgend soll die Erfindung anhand der beigefügten Zeichnung näher erläutert werden. Es zeigen:

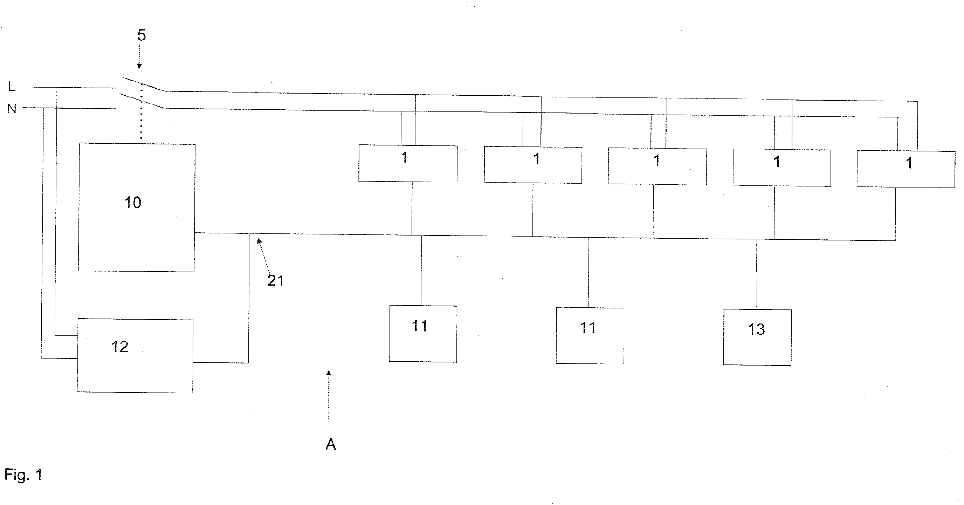

Fig. 1 schematisch die Ausgestaltung eines Beleuchtungssystems mit einem erfindungsgemäßen mobilen Bediengerät, einem Steuergerät, an das Netz gekoppelte Betriebsgeräte und weitere Steuergeräte

Nachfolgend wird die Erfindung anhand eines Ausführungsbeispiels eines Beleuchtungssystems mit einem erfindungsgemäßen Steuergerät, die über das Steuergerät an das Netz gekoppelten Betriebsgeräte und weitere Steuergeräte erläutert.
Die vorliegende Erfindung kann bei sämtlichen Arten von Betriebsgeräten für Leuchtmittel eingesetzt werden. Dabei ist die Anwendung von ganz verschiedenen Leuchtmitteln möglich, es können insbesondere Gasentladungslampen, Halogenlampen oder auch anorganische oder organische Leuchtdioden eingesetzt werden.

Das Betriebsgerät 1 und das Steuergerät 10 sind Bestandteil eines Beleuchtungssystems A.

Zusätzlich können weitere Steuergeräte 11 an die Busleitung 21 angeschlossen sein.
Die verschiedenen Steuergeräte 11 werden auch als Aktuatoren bezeichnet und können verschiedene Sensoren wie beispielsweise Bewegungs- oder Helligkeitssensoren aber auch durch einen Benutzer steuerbare Aktuatoren wie beispielsweise Schalter, Taster oder auch berührungsempfindliche Bildschirme mit einem Benutzerinterface zur Beleuchtungssteuerung sein.

Die Busleitung 21 ist als zweidrahtige Datenleitung ausgebildet, die als Steuerbefehl ein Digitalsignal mit einer niedrigen Gleichspannung überträgt. Über die Busleitung 21 wird beispielweise eine Datenübertragung gemäß DALI Standard übertragen. Die Schnittstellenschaltung 4 und das Steuergerät 10 sind in der Lage, Steuerbefehle gemäß dem DALI Standard zu empfangen.

Anzumerken ist, dass die Datenübertragung der Steuerbefehle über die Busleitung 21 nicht zwingend nach dem DALI Standard erfolgen muß, sondern sie kann beispielsweise auch mittels anderer Formen der digitalen Signalübertragung übertragen werden. Es existiert beispielsweise das Protokoll DSI der Firma Tridonic oder auch das Protokoll DMX

Das Steuergerät 10 kann über die Busleitung 21 einzelne oder mehrere Betriebsgeräte 1 von Leuchtmitteln steuern, wobei es digitale Steuerbefehle empfangen und auch aussenden kann.

Es ist wenigstens ein mobiles Bediengerät (13) an das Steuergerät (10) oder wie in Fig. 1 dargestellt direkt an die Busleitung 21 angeschlossen. Das mobile Bediengerät (13) ist zum Generieren eines modulierten Signals ausgelegt und zur Ausgabe des modulierten Signals an einem Ausgang des mobilen Bediengeräts (13) an das Steuergerät (10) oder an die Busleitung 21 ausgelegt. Das Steuergerät (10) bzw. die Betriebsgeräte 1 sind zum Empfangen und Auswerten des modulierten Signals ausgelegt.

Bei der Variante, wo das mobile Bediengerät 13 mit dem Steuergerät 10 verbunden ist, ist das Steuergerät 10 zur Auswertung und Weitergabe der vom mobilen Bediengerät 13 ausgegebenen modulierten Signale ausgelegt. Das Steuergerät (10) kann in diesem Fall zur Auswertung des modulierten Signals ausgelegt sein und auch zur Weitergabe der mittels der Auswertung des modulierten Signals erfassten Befehle an die Busleitung (21).
In einer alternativen Variante kann das mobile Bediengerät wie in Fig. 1 dargestellt direkt mit der Busleitung 21 verbunden sein.

Das mobile Bediengerät (13) kann zur Ausgabe des modulierten Signals an einem Audioausgang ausgelegt sein.
Dies kann beispielsweise ein standardisierter Steckverbinder sein, beispielsweise ein Anschluß für einen Klinkenstecker mit 2,5mm oder 3,5 mm Durchmesser.

Das modulierte Signal kann beispielsweise ein frequenzmoduliertes Signal oder moduliertes Signal mit veränderlicher Pulsbreite oder veränderlichem Pulsverhältnis sein.

Das Steuergerät (10) kann die Auswertung des modulierten Signals mittels eines Demodulationsverfahrens, beispielsweise mittels einer Fast-Fourier-Transformation, durchführen.

Das mobile Bediengerät (13) mittels des modulierten Signals zur Konfiguration des Beleuchtungssystems, insbesondere einzelner Betriebsgeräte (1), ausgelegt sein. Die Versorgung der Steuergeräte (10) kann über die Busleitung (21) erfolgen und auch eine Übertragung der Steuerbefehle über die Busleitung (21) erfolgen.

Das mobile Bediengerät (13) kann zum Steuern von Betriebsgeräten (1) von Leuchtmitteln genutzt werden. Es kann zur Ausgabe digitaler Steuerbefehle an die Betriebsgeräte (1) ausgelegt sein. Die Ausgabe dieser digitalen Steuerbefehle kann mittels der Ausgabe eines modulierten Signals an einem Ausgang des mobilen Bediengeräts (13) erfolgen, welcher mit einer Busleitung (21) direkt oder indirekt über ein Steuergerät (10) verbunden ist.

Das mobile Bediengerät (13) kann über einen berührungsempfindlichen Bildschirm verfügen, welcher zur Anzeige und Einstellung von Konfigurationsparametern der Betriebsgeräte (1) ausgelegt ist. Beispielsweise kann ein Plan des Beleuchtungssystems mit den verschiedenen Betriebsgeräten 1 dargestellt werden, wobei einzelne Betriebsgeräte selektiert und parametrisiert oder in ihrer Helligkeit gesteuert werden können. Das mobile Bediengerät (13) kann zur Zuweisung von Adressen für die Betriebsgeräte (1) ausgelegt sein.

Die Erfindung betrifft auch ein Verfahren zur Steuerung eines Beleuchtungssystems (A) aufweisend eine Busleitung (21) an die wenigstens ein Betriebsgerät für Leuchtmittel und wenigstens ein mobiles Bediengerät (13) angeschlossen ist, wobei das Beleuchtungssystem von dem mobilen Bediengerät (13) durch Befehle gesteuert wird umfassend die folgenden Schritte:
- Generieren eines modulierten Signals in dem mobilen Bediengerät (13),
- Senden des modulierten Signals durch Ausgabe dieses Signals an einem Ausgang des mobilen Bediengerät (13) an die Busleitung (21),
- Empfangen und Auswerten des modulierten Signals durch ein Steuergerät (10),
- Weiterleiten der ausgewerteten Befehle durch das Steuergerät(10) an die Busleitung (21).

Die voneinander unabhängigen Betriebsgeräte 1 können durch unterschiedliche Adressen voneinander unterschieden werden.

Das Steuergerät (10) kann zum Zwecke des Wiederaussendens oder Weiterleiten der vom mobilen Bediengerät 13 empfangenen modulierten Signale die somit empfangenen Steuerbefehle abspeichern. Es kann entweder immer nur den zuletzt empfangenen Steuerbefehl abspeichern oder zwischenspeichern oder aber die gesamte Abfolge der empfangenen Steuerbefehle abspeichern. Auf diese Weise können die Betriebsgeräte 1 auch zu einem späteren Zeitpunkt noch konfiguriert werden und über Steuerbefehle ausgesendete Informationen erhalten. Somit kann eine Änderung der Konfiguration des Beleuchtungssystems auch während des Ausschaltzustandes der Betriebsgeräte 1 erfolgen. Dies wäre der Fall, wenn zum Beispiel in einem Bürogebäude bei ausreichendem Tageslicht keine Beleuchtung durch die Betriebsgeräte 1 erforderlich ist und diese abgeschaltet sind, aber durch einen Benutzer die Konfiguration des Beleuchtungssystems angepasst werden soll. Somit kann ohne Einschalten der Leuchtmittel eine Anpassung während solch einer Ausschaltphase eine Änderung der Konfiguration durchgeführt werden.

Die Konfiguration kann zum Beispiel bestimmte Beleuchtungsszenen oder Verhaltensmuster für das Beleuchtungssystem und die Betriebsgeräte 1 bestimmen.

Weiterhin kann das Steuergerät 10 selbstständig zu den übertragenen Steuerbefehlen eine Anpassung der Reihenfolge der gesendeten Steuerbefehle durchführen oder aber auch weitere Steuerbefehle hinzufügen oder auch bestimmte Steuerbefehle weglassen.

Die Energieversorgung des Steuergerätes 10 und der Steuergeräte 11 kann über eine Busversorgung 12 erfolgen. Dabei kann die Busversorgung 12 die Busleitung 21 speisen, indem eine Übertragung nach dem sogenannten 'Active Low' Prinzip angewendet wird. Bei einer solchen Übertragung liegt dauerhaft ein Pegel von beispielweise 12V an, solange keine Daten übertragen werden. Im Fall einer Datenübertragung wird der Pegel zum Übertragen eines Bit auf einen Pegel unter beispielsweise 2V gezogen wird.

Auf diese Weise liegt eine dauerhafte Spannung auf der Busleitung 21 an und somit ist eine Versorgung der Steuergeräte 10 und 11 über die Busleitung 21 möglich.

Durch die Energieversorgung der Steuergeräte 10 und 11 über die Busversorgung 12 ist eine effiziente Versorgung dieser Steuergeräte möglich, da nur an einer zentralen Stelle die Netzspannung auf die für die Versorgung der Steuergeräte 10 und 11 erforderliche Niedervoltspannung heruntergesetzt werden muß.

Alternativ kann das Steuergerät 10 über eine eigene Energieversorgung verfügen, die direkt an die Netzversorgung gekoppelt ist.

Das mobile Bediengerät 13 kann den Zustand der Betriebsgeräte 1 über die Busleitung 21 abfragen.

Weiterhin kann das mobile Bediengerät 13 auch über auf ihm angeordnete Taster oder Schalter, durch einen Touchscreen (berührungsempfindlicher Bildschirm)oder andere Einstellmöglichkeiten auch direkt durch einen Benutzer konfiguriert und gesteuert werden. Durch die direkte Steuermöglichkeit kann der Benutzer auch Steuerbefehle wie beispielsweise Helligkeitswerte vorgeben.

Das mobile Bediengerät 13 kann beispielsweise ein Mobiltelefon oder ein sogenanntes Smartphone oder auch ein tragbarer Computer sein.

Das mobile Bediengerät 13 kann eine Software aufweisen, die die Generierung der modulierten Signale innerhalb des mobilen Bediengeräts 13 unterstützt.

Der Ausgang zur Ausgabe der modulierten Signale des mobilen Bediengerätes 13 kann zusätzlich dazu ausgelegt sein, auch Signale zu Empfangen. Für diesen Zweck kann beispielsweise eine zusätzliche Verbindung für den Empfang von Signalen vorhanden sein oder der Ausgang kann auch als Eingang umschaltbar sein. Auf diese Weise kann eine bidirektionale Übertragung von Signalen zu dem Steuergerät 10 und / oder der Busleitung 21 ermöglicht werden. Beispielsweise kann, wenn der Ausgang des mobilen Bediengeräts 13 als Audioausgang für Stereosignale ausgebildet ist, die dritte Leitung dieses Ausgangs zum Empfang von Signalen durch das mobile Bediengerät 13 genutzt werden.

## Patentansprüche

1. Verfahren zur Steuerung eines Beleuchtungssystems (A) aufweisend eine Busleitung (21) an die wenigstens ein Betriebsgerät für Leuchtmittel, ein Steuergerät (10) und wenigstens ein mobiles Bediengerät (13) angeschlossen sind, wobei das Beleuchtungssystem von dem mobilen Bediengerät (13) durch digitale Steuerbefehle gesteuert wird umfassend die folgenden Schritte:
- Generieren eines modulierten Signals in dem mobilen Bediengerät (13),
- Senden des modulierten Signals durch Ausgabe dieses Signals an einem Ausgang des mobilen Bediengeräts (13) an die Busleitung (21), **gekennzeichnet durch** Empfangen und Auswerten des modulierten Signals durch das Steuergerät (10),
- Weiterleiten des ausgewerteten modulierten Signals durch das Steuergerät(10) an die Busleitung (21).

2. Beleuchtungssystem (A) aufweisend mindestens ein Betriebsgerät (1) zum Betreiben von Leuchtmitteln, eine Busleitung und ein Steuergerät (10), welches digitale Steuerbefehle empfängt, wobei das mindestens eine Betriebsgerät und das Steuergerät an die Busleitung angeschlossen sind,
wobei das Beleuchtungssystem (A) wenigstens ein mobiles Bediengerät (13) aufweist,
wobei das wenigstens eine mobile Bediengerät (13) an die Busleitung (10) angeschlossen ist, wobei das mobile Bediengerät (13) zum Generieren eines modulierten Signals ausgelegt ist und das mobile Bediengerät (13) zur Ausgabe des modulierten Signals an einem Ausgang des mobilen Bediengeräts (13) an das Steuergerät (10) ausgelegt ist, **dadurch gekennzeichnet, daß** das Steuergerät (10) zum Empfangen und Auswerten des modulierten Signals ausgelegt ist und zum Weiterleiten des ausgewerteten modulierten Signals an die Busleitung (21) ausgelegt ist.

3. Beleuchtungssystem (A) nach Anspruch 2,
**dadurch gekennzeichnet,**
**daß** das mobile Bediengerät (13) zur Ausgabe des modulierten Signals an einem Audioausgang ausgelegt ist.

4. Beleuchtungssystem (A) nach Anspruch 2 oder 3, **dadurch gekennzeichnet,**
**daß** das Steuergerät (10) die Auswertung des modulierten Signals mittels einer Fast-Fourier-Transformation durchführt.

5. Beleuchtungssystem (A) nach Anspruch 2 bis 4,
**dadurch gekennzeichnet,**
**daß** das mobile Bediengerät (13) mittels des modulierten Signals zur Konfiguration des Beleuchtungssystems, insbesondere einzelner Betriebsgeräte (1), ausgelegt ist.

6. Beleuchtungssystem (A) nach Anspruch 2 bis 5, **dadurch gekennzeichnet,**
**daß** die Versorgung der Steuergeräte (10) über die Busleitung (21) erfolgt und auch eine Übertragung der Steuerbefehle über die Busleitung (21) erfolgt.

## Claims

1. A method for controlling a lighting system (A) having a bus line (21) to which at least one operating device for lighting means, a control unit (10) and at least one mobile operating device (13) are connected, wherein the lighting system is controlled by the mobile operating device (13) through digital control commands comprising the following steps:
- Generate a modulated signal in the mobile operating device (13),
- Transmit the modulated signal by outputting said signal at an output of the mobile operating device (13) to the bus line (21),
**characterized by**
- Receiving and evaluating the modulated signal by the control unit (10),
- Forwarding the evaluated modulated signal through the control unit (10) to the bus line (21).

2. A lighting system (A) having at least one operating device (1) for the operation of lighting means, a bus line and a control unit (10), which receives digital control commands,
wherein the at least one operating device and the control unit are connected to the bus line,
wherein the lighting system (A) has at least one mobile operating device (13),
wherein the at least one mobile operating device (13) is connected to the bus line (10), wherein the mobile operating device (13) is designed for generating a modulated signal and the mobile operating device (13) is designed for outputting the modulated signal at an output of the mobile operating device (13) to the control unit (10),
**characterized in,**
**that** the control unit (10) is designed for receiving and evaluating the modulated signal and is designed for forwarding the evaluated modulated signal to the bus line (21).

3. A lighting system (A) according to Claim 2,
**characterized in**
**that** the mobile operating device (13) is designed for outputting the modulated signal to an audio output.

4. A lighting system (!) according to Claim 2 or 3,
charactrerized in
that the control unit (10) carries out the evaluation of the modulated signal by means of a fast Fourier transformation.

5. A lighting system (A) according to Claim 2 to 4,
**characterized in**
**that** the mobile operating device (13) is designed to configure the lighting system, in particular individual operating devices (1), by means of the modulated signal.

6. A light system (A) according to Claim 2 to 5,
**characterized in**
**that** the supply of the control units (10) occurs via the bus line (21) and a transfer of the control commands also occurs via the bus line (21).

## Revendications

1. Procédé de commande d'un système d'éclairage (A), présentant un bus (21) auquel sont connectés au moins un appareil de fonctionnement pour des moyens d'éclairage, un appareil de commande (10) et au moins un appareil de manoeuvre (13) mobile, le système d'éclairage étant commandé par l'appareil de manoeuvre (13) mobile par des instructions de commande numériques, comprenant les étapes suivantes :
- production d'un signal modulé dans l'appareil de manoeuvre (13) mobile,
- envoi du signal modulé par la délivrance au bus (21) de ce signal sur une sortie de l'appareil de manoeuvre (13) mobile,
**caractérisé par**
- la réception et l'analyse, par l'appareil de commande (10), du signal modulé,
- la transmission au bus (21), par l'appareil de commande (10), du signal modulé analysé.

2. Système d'éclairage (A), présentant au moins un appareil de fonctionnement (1) pour le fonctionnement de moyens d'éclairage, un bus et un appareil de commande (10) qui reçoit des instructions de commande numériques, l'appareil de fonctionnement au moins au nombre de un et l'appareil de commande étant connectés au bus,
le système d'éclairage (A) présentant au moins un appareil de manoeuvre (13) mobile,
l'appareil de manoeuvre (13) mobile au moins au nombre de un étant connecté au bus (10), l'appareil de manoeuvre (13) mobile étant conçu pour la production d'un signal modulé, et l'appareil de manoeuvre (13) mobile étant conçu pour la délivrance à l'appareil de commande (10) du signal modulé sur une sortie de l'appareil de manoeuvre (13) mobile,
**caractérisé en ce que**
l'appareil de commande (10) est conçu pour la réception et l'analyse du signal modulé et est conçu pour la transmission au bus (21) du signal modulé analysé.

3. Système d'éclairage (A) selon la revendication 2, **caractérisé en ce que**
l'appareil de manoeuvre (13) mobile est conçu pour la délivrance du signal modulé sur une sortie audio.

4. Système d'éclairage (A) selon la revendication 2 ou 3, **caractérisé en ce que**
l'appareil de commande (10) effectue l'analyse du signal modulé au moyen d'une transformation de Fourier rapide.

5. Système d'éclairage (A) selon les revendications 2 à 4, **caractérisé en ce que**,
au moyen du signal modulé, l'appareil de manoeuvre (13) mobile est conçu pour la configuration du système d'éclairage, en particulier d'appareils de fonctionnement (1) individuels.

6. Système d'éclairage (A) selon les revendications 2 à 5, **caractérisé en ce que**
l'alimentation des appareils de commande (10) s'effectue par le biais du bus (21), et **en ce qu'**une transmission des instructions de commande s'effectue par le biais du bus (21).
